# EUROPÄISCHE PATENTSCHRIFT

(11) **EP 0 536 565 B1**
(45) Veröffentlichungstag und Bekanntmachung des Hinweises auf die Patenterteilung: **12.03.1997**
(21) Anmeldenummer: 92115743.4
(22) Anmeldetag: 15.09.1992
(51) Int. Cl.: G01B 7/02, B23K 7/10

(54) **Vorrichtung zum berührungslosen Erfassen von Daten einer thermischen Bearbeitungsmaschine**
Apparatus for contact-free data determination of a thermal machine-tool
Appareil pour déterminer sans contact des données d'une machine d'usinage thermique

(30) Priorität: 01.10.1991 DE 4132651; 01.10.1991 DE 4132649; 08.02.1992 DE 4203672; 01.10.1991 DE 4132648; 18.11.1991 DE 4137835
(43) Veröffentlichungstag der Anmeldung: 14.04.1993
(73) Patentinhaber: MESSER GRIESHEIM GMBH, D-60547 Frankfurt (DE)
(72) Erfinder: Albert, Hans-Joachim, W-6238 Hofheim-Lorsbach (DE); Bergmann, Eckhardt, W-7800 Freiburg (DE); Henrici, Reinhard, Dr., W-6251 Eschhofen (DE)

(56) Entgegenhaltungen:
- EP-A- 0 130 940
- EP-A- 0 191 000
- EP-A- 0 274 663
- EP-A- 0 303 563
- DE-C- 3 518 147
- GB-A- 2 064 135
- US-A- 3 387 776
- US-A- 4 071 820

## Beschreibung

Die Erfindung betrifft eine Vorrichtung zum berührungslosen Erfassen von Daten einer thermischen Bearbeitungsmaschine mit mindestens einem Bearbeitungswerkzeug und einem Werkstück.

Ein Werkstück, wie eine Metallplatte oder ähnliches, kann unter Verwendung eines Schneidbrenners oder eines Laserschneidkopfes, mittels dem ein Schneidstrahl auf die Oberfläche gerichtet wird, der das Werkstück durchdringt, in gewünschte Formen geschnitten werden.

Im allgemeinen ist der Schneidbrenner in einer beweglichen Halterung montiert, so daß das Werkstück entsprechend der gewünschten Form abgefahren werden kann. Der Abstand zwischen Brennerdüse und Werkstück muß konstant sein, damit ein optimales Schneiden des Werkstückes erreicht und beibehalten wird. Ist der Abstand zwischen Brennerdüse und Werkstück zu gering, können Unebenheiten in dem Werkstück zu einer Berührung mit der Brennerspitze führen, wodurch die Flamme ausgeht und das Schneiden des Werkstückes beendet wird. Ein zu großer Abstand kann sich nachteilig auf die Schnittqualität auswirken und bei zu großem Abstand reißt der Schnitt ab. Beim Laserschneiden verschiebt sich durch große Abstandsänderungen die Lage des Fokuspunktes im Blech und ein Schnitt ist nicht mehr möglich.

Es ist bekannt, daß mit kapazitiven Meßmethoden Abstände zu Werkstücken gemessen und über einen geschlossenen Regelkreis die Halterung des Schneidbrenners auf konstanter Höhe über der Werkstückoberfläche gehalten wird (DE 26 41 851 A1, DD 225 651 A1).

Bei der kapazitiven Abstandsmessung werden Abtastelemente in der Nähe der Brennerdüse eingesetzt, die in Ring-, Hufeisen- oder Plättchenform ausgebildet sind. Da sie im heißen bzw. Spritzerbereich des Schneidstrahles angeordnet sind, weisen sie nur eine geringe Standzeit auf und müssen in regelmäßigen Abständen ausgetauscht werden.

Um bei den bekannten Konstruktionen ein ausreichend großes Meßsignal zu erhalten, werden in der Regel ringförmige Sensorelemente mit großem Durchmesser eingesetzt, die dann nachteilig sind, wenn in unmittelbarer Nachbarschaft die Werkstückendkante verläuft oder bereits in der unmittelbaren Nachbarschaft Werkstücke aus der Werkstückplatte ausgeschnitten wurden, so daß das Sensorelement teilweise nicht mehr über der Werkstückoberfläche angeordnet ist. Dies führt zu fehlerhaften Meßsignalen.

Bei Vorrichtungen mit Oszillatorkreis und frequenzbestimmender Kapazität mit nachgeschalteter PLL-Schaltung oder ähnlichem sind ferner LC-Kombinationen in der Nähe der Abtastelemente notwendig. Dies bedingt in der Praxis eine Anordnung von Elektronik im warmen Bereich des Trennprozesses und eine große Teilevielfalt bei unterschiedlichen Maschinen und und. Brennerkonstruktionen. Außerdem treten infolge von den verwendeten Hochspannungszündsystemen hohe Feldstärken und große elektromagnetische Störungen auf. Die Störkonturen am Brenner werden vergrößert. Damit ermöglichen die bekannten Vorrichtungen zwar mit den verschiedensten Systemen die erforderlichen Funktionen, doch ist der Aufwand dafür mechanisch, elektrisch bzw. elektronisch groß. Individuelle mechanische und elektrische Konstruktionselemente der thermischen Bearbeitungsmaschine, wie Größe des Brennerwagens, Art, Größe und Form des Schneidbrenners, Typ der Düsen und Düsenkappen, Art des Gases, Markierwerkzeuge, Brennerhalter, Abstand zu Nachbarbrennern bei Einzelbrennerhöhenverstellungen als auch bei Mehrbrenneraggregaten, zusätzliche Anbauten in Brennernähe und praxistypische Prozeßschwankungen sowohl bei Lichtbogen als auch bei Autogen- und Laserverfahren sowie die verwendeten Kabellängen, deren Kapazität und Steckverbindungen im Meßkreis und Übergangswiderstände, z. B. an Schleifringen bei unendlich drehbaren Aggregaten führen zu veränderlichen Parasitärkapazitäten, die in die Abstandsmessung mit eingehen.

Ferner ist bekannt, daß thermische Einflüsse auf brennernahe Elektronikkomponenten als auch auf die Kapazität von Kabeln und Steckverbindungen wirken und besonders bei frequenzgestützten Vorrichtungen zu Driften während des Betriebes führen. Der Dynamikbereich solcher Vorrichtungen beträgt derzeit nur wenige Millimeter Abstand Düse-Blech (Werkstück) und erfordert eine aufwendige und präzise Justage der Abtastelemente.

Eine Anordnung zum Kompensieren von störenden Ausstrahlungen elektromagnetischer Hochfrequenzschwingungen bei berührungslosen Abtasteinrichtungen ist in der DE 30 42 781 A1 beschrieben.

Weiterhin ist eine Vorrichtung zum berührungslosen Bestimmen der Lage und/oder der dielektrischen Eigenschaften von Objekten für die Glühofenanwendung bekannt, mittels der ein empfindlicher Nachweis der Störung eines elektrischen Wechselfeldes geführt wird. Sie besteht aus einer Anordnung von jeweils drei elektrischen Leitern, von denen zwei als felderzeugende Sendeelektroden mit einer niederfrequenten gegenphasigen Wechselspannung betrieben werden, während der dritte Leiter als stromempfindliche Meßelektrode dient. Durch frequenz- und phasenempfindliche Aufbereitung der Meßsignale ergibt sich eine hohe Meßempfindlichkeit und eine hohe Unempfindlichkeit gegen elektrische Störeinflüsse (EP 0 038 551 B1).

Dabei ist die Richtungsabhängigkeit der beiden Sendeelektroden bei Schneidprozessen störend, da dort in einer Ebene jederzeit in jede beliebige Richtung geschnitten werden kann. Der meßwertverfälschende Einfluß von Schnittfugen ist besonders groß, wenn in elektrodenrichtung geschnitten würde. Ferner ist es mechanisch-konstruktiv aufwendig, zwei Sendeelektroden im Brennerbereich anzubauen.

Außerdem ist eine induktive Vorrichtung bekannt, die aus mindestens einer Empfängerspule und wenigstens einer, an einen HF-Generator angeschlossenen Primär-Erreger-Spule zum Induzieren von in ungestörtem Zustand bestimmbaren Spannungswerten entgegengerichteter Polarität in die Empfängerspule besteht. Zur Kompensation von Fehlern und Abweichungen bei der Induktion in die Empfängerspule ist wenigstens eine zusätzliche Erreger-Spule vorgesehen, welche ein Kompensationsfeld bzw. Kompensationsspannungen in der Empfängerspule erzeugt (EP 0 300 974 A1).

Neben den physikalisch festliegenden unterschiedlichen Signalstabilitäten und Störspannungsabständen der verschiedenen Meßmethoden ermöglicht der Stand der Technik zwar mit den verschiedenen Systemen die erforderlichen Funktionen zu realisieren, jedoch führen die Beeinflussungen durch das Auftreten von Plasmen und damit anderer Leitfähigkeiten und parasitärer Kapazitäten im Bereich der Anordnung der Sensorelemente bzw. der elektroden zu aufwendigen nachgeschalteten elektronischen Korrekturmaßnahmen des Abstandssignals. Die eigentliche Meßstrecke zwischen Sensorabtastelementen und Werkstück wird beeinflußt. Die Autogenflamme, der Plasmalichtbogen bzw. der Laserstrahl usw. beeinflussen und verfälschen dabei die Meßwerte von kapazitiven Abtastsystemen je nach Verfahren und Prozeßzustand.

Dies hat zur Folge, daß zwischen den erreichbaren Positionen der Werkzeuge zum Blech mit und ohne Plasma große Unterschiede bestehen. Der Effekt ist für den Schneidprozeß und aber auch für eine Maschinenautomatisierung nachteilig.

In den meisten Fällen muß in einzelnen Schneidprozeßphasen eine für die Schnittqualität schädliche falsche Abstandsmessung und damit eine falsche Höhe der Düse über dem Blech als Kompromiß akzeptiert werden. Um Schnittabrisse infolge Rückzündungen, beispielsweise bei Autogenverfahren zu vermeiden, müssen während des Schneidbetriebes oft zu große Abstände gefahren werden mit der Folge von sinkender Schnittqualität und geringeren Prozeßwirkungsgrades bzw. geringerer Schneidgeschwindigkeit. Umgekehrt kann bei zu großen Abständen eine zu geringe Leistungsdichte den Trennprozeß unterbrechen.

Bekannt ist weiterhin ein Stand der Technik, bei dem der kapazitive ringförmige Abstandssensor konzentrisch um die Brennerdüse angeordnet ist, wobei sein Abstand zum Werkstück größer als der der Brennerdüse ist. Dieser Sensorring dient außer zur Dedektierung des Abstandes auch zur Erfassung einer Havarie von Sensorring und Werkstück, wenn dieser seitlich, bei horizontalem Verfahrweg, das Werkstück kontaktiert. Eine nachfragende Elektronik wertet die Berührung aus und veranlaßt nachfolgende Steuerungen/Regelungen den Brenner mit Brennerdüse außerhalb des Gefahrenbereiches zu bringen.

Die tieferstehende Brennerdüse wird durch den Stand der Technik, insbesondere bei vertikalem Verfahrweg, nicht geschützt.

US-A-3 387 776 beschreibt eine Einrichtung zum Messen des Abstands zwischen einem Werkstück und einem Empfänger. Das Werkstück ist mit einem Oszillator verbunden. Das vom Werkstück ausgesandte Signal wird vom Empfänger detektiert und einem Komparator zugeführt, dem auch das Signal eines Referenzgenerators zugeführt wird. Aus dem Ausgangssignal des Komparators wird ein Abstandssignal gewonnen.

Der Erfindung liegt die Aufgabe zugrunde, eine Vorrichtung zum Erfassen von Brennschneid-oder Wasserstrahlbearbeitungs daten, insbesondere des Abstandes zwischen mindestens einem Bearbeitungswerkzeug und einem Werkstück einer thermischen oder Wasserstrahl maschine zu schaffen, die unempfindlich ist gegenüber den thermischen und maschinen- und prozeßspezifischen Beeinflussungen und eine Reduzierung des technischen Gesamtaufwandes erlaubt.

Die erfindungsgemäße Vorrichtung, mit der die Aufgabe gelöst wird, ist durch die Merkmale des unabhängigen Patentanspruches gekennzeichnet.

Durch die Erfindung wird eine hohe Unempfindlichkeit gegen elektrische Störeinflüsse und temperaturabhängige Umgebungseinflüsse erreicht, wobei mit der Vprrichtung in beliebige Richtungen geschnitten werden kann, weil durch die Ausbildung des Werkstückes als Sender und dem symmetrisch/konzentrisch um den 3renner angeordneten Empfänger eine Richtungsunabhängigkeit erreicht wird. Hinzu kommt, daß im temperaturbelasteten Bereich zwischen Sender und Empfänger keine separaten Sendeelektroden angeordnet werden müssen. Dies reduziert den mechanisch konstruktiven Aufwand erheblich.

Durch die Merkmale des Anspruches 2 wird eine höhere Ausgangsspannung des als Sender wirkenden Werkstückes erzielt, wodurch ein großer Störspannungsabstand des Abstandsmeßsignales erreicht wird.

Durch die Merkmale des Anspruches 3 ist die gesamte Elektronik der Vorrichtung potentialfrei gegenüber der Umgebung. Dies ermöglicht die Meßmethode selbst.

Weiterhin wird es vorteilhaft möglich, über verschiedene Methoden, wie potentiometrisch oder ferneingeszellt, verschiedene Arbeitsabstände oder Anpassungen an die Empfängerformen durchzuführen, weil eine veränderbare Wechselspannung über eine Leitung mit Kondensator dem Verstärker zugeführt wird.

Durch die Merkmale des Anspruches 4 wird es vorteilhaft möglich, mit je einer Sende- und einer Empfangselektrode ein Differenzwechselfeld zu messen.

Durch die Merkmale der Ansprüche 5 bzw. 6 ist es vorteilhaft möglich, über eine Rechnerschnittstelle (z. B. parallel, seriell, Bussysteme) automatisch eine Sollwerthöhenvorgabe zu wählen, wobei die Werte beispielsweise aus einer Technologiedatenbank übernommen werden. Ferner gestattet Anspruch 5 einen geschlossenen Regelkreis aufzubauen, der einen automatischen Null-Abgleich für eine neu frei gewählte Höhe erlaubt. Desgleichen kann während des Schneidbetriebes eine neue, definierte Höhe, Offsetvorgabe, Offsetkompensation, programmierter Abstandverlauf in Abhängigkeit von Maschine, Werkstück, Prozeß usw. durchgeführt werden.

Durch die Merkmale des Anspruches 7 ist es vorteilhaft möglich, über ein einfaches Potentiometer die nötige Kompensationsspannung zum Null-Abgleich des Sensors über den festen Kondensator in den Verstärker einzukoppeln. Wird das Potentiometer durch einen D/A-Wandler ersetzt, ist Fernbedienbarkeit möglich.

Durch die Merkmale des Anspruches 8 ist es vorteilhaft möglich, bei Betrieb von mehreren Sensoren an einem Werkstück die Störbeeinflussung von Nachbarsensoren zu minimieren.

Durch die Merkmale des Anspruches 9 wird es vorteilhaft möglich, kleinere Sensorelemente, insbesondere kleinere Sensorringe, einzusetzen, da eine Steigerung der Meßgenauigkeit zur störungsfreieren Erfassung von Wechselfeldern, die vom Werkstück als Sendeantenne ausgestrahlt werden, durch eine hohe Richtwirkung erreicht wird. Die als koaxiale Leiter ausgebildeten Anschlußstücke gewährleisten vorteilhaft eine Felddetektion vorwiegend in Richtung eines Senders, der in einer vorteilhaften Ausbildung durch das Werkstück gebildet wird.

Vorteilhaft können Bauteile in engem Abstand zueinander geschachtelt werden, weil nur noch kleine Sensorelemente erforderlich sind, die nicht in den Nachbarbereich des Nachbarschneidbrenners ragen. Damit ist eine bessere Ausnutzung der Werkstückplatte gegeben. Die Wirtschaftlichkeit einer thermischen oder Wasserstrahl-Bearbeitungsmaschine kann wesentlich erhöht werden.

Durch die Merkmale des Anspruches 10 werden vorteilhaft die Abschirmbüchse mit der Haltevorrichtung elektrisch leitend bei kleinem Übergangswiderstand verbunden. Der Brenner wird auf das Bezugspotential des Sensors gelegt.

Durch die Merkmale der Ansprüche 11, 12, 14 und 15 wird eine freie Verschiebemöglichkeit über einen translativen Freiheitsgrad Z nach Lösen einer Schraube ermöglicht. Der Verschiebeweg wird durch einen einstellbaren und einen festen Anschlag begrenzt und ist auf unterschiedliche Brenner- und Düsentypen einstellbar. In der Arbeitsposition kann zum reproduzierbaren Einstellen der untere Anschlag verwendet werden. Dieser kann in festem Abstand zu der Haltevorrichtung oder einstellbar ausgebildet sein. Eine Feinjustage der Sensorelemente gegenüber dem Werkzeug bzw. der Brennerdüse kann ohne Demontageaufwand durch geradliniges Verschieben des Anschlußstückes vorgenommen werden. Radial angeordnete Maßlinien oder Nonien am Außenmantel des Anschlußblockes gestatten eine reproduzierbare Einstellung der Sensorelemente zur Position von Düse und/oder Brenner. Die beim Einsatz von Brennern mit verschiedenen Durchmessern in den Halterungen auftretenden Relativverschiebungen zwischen Brennermittelachse und Sensorelement werden durch einen rotativen Freiheitsgrad nach Lösen der Klemmverbindung korrigiert.

Durch die Merkmale des Anspruches 13 kann über eine Zwangsführung die Koaxialführung auch unter mechanischer und thermischer Belastung gewährleistet werden. Es wird ein Eindringen von Schneidstaubpartikeln in den Koaxialleiter verhindert. Die Leistungskapazität bleibt konstant.

Durch die Merkmale der Ansprüche 19 bis 21 werden vorteilhaft die Störeffekte von unterschiedlichen Plasmen wie sie zwischen Flamme und Sensorring und/oder Werkzeug und/oder Düse, bzw. Düsenkappe entstehen auf die kapazitiven Abstandssysteme einer Brennschneidmaschine verringert, weil die Werkzeuge beispielsweise Schneidbrenner, auf dem gleichen Bezugspotential liegen wie der frequenzerzeugende Generator der Sensoren. Durch diese Maßnahme wird sichergestellt, daß sich beim Sensorabgleich in Arbeitshöhe der Brennerdüse über dem zu bearbeitenden Blech eine sich einstellende bestimmte parasitäre Kapazität mit abgeglichen wird und dadurch keinen Einfluß auf das Sensorsignal ausüben kann. Ist das Werkzeug wie der Brenner bzw. die Düse bzw. die Düsenkappe auf Maschinenmasse bezogen, wird bei Zündung der Flamme, des Lichtbogens bzw. durch die sich einstellende Ionisation und Plasmawolke beim Laserschneiden ein ohmscher Widerstand zwischen Werkstück und Brenner bzw. Düse bzw. Düsenkappe hergestellt. Dieser Widerstand bewirkt eine scheinbare Vergrößerung der Werkstückmasse zum Sensierelement hin. Da im Falle Werkzeug auf Maschinenmasse die Meßkapazität C1 auf Nennarbeitsabstand Düse-Werkstück fest abgeglichen ist, gehen die oben beschriebenen Verhältnisse als scheinbare Annäherung des Sensorringes zum Werkstück ein. C3 bildet sich parallel zu C1 aus und vergrößert die Gesamtkapazität. Deshalb fährt im geschlossenen Regelkreis der Brenner nach oben. Im Falle von Werkzeug auf potentialfreiem Elektronik-Null bildet sich ebenfalls der plasmabedingte Widerstand R1 aus. Die Kapazität addiert sich nur anteilig zu C1, so daß keine oder nur geringe Abstandsänderung im geschlossenen Regelkreis bei vorhandenem Plasma auftritt.

Ein Ausführungsbeispiel ist in der Zeichnung dargestellt und wird im folgenden näher beschrieben.

Es zeigen
- Fig. 1: ein Blockschaltbild der Vorrichtung zum Generieren eines Abstandsignales nach der Erfindung;
- Fig. 2: einen über Teilbereiche als koaxialer Leiter ausgebildeten Anschlußblock;
- Fig. 3: einen vollständig bis zum Sensorelement als koaxialer Leiter ausgebildeten Anschlußblock;
- Fig. 4: ein Blockschaltbild der Vorrichtung zum Generieren eines Havariesignales nach der Erfindung;
- Fig. 5: die Anordnung der Vorrichtungskomponenten gemäß den Ansprüchen 19 bis 21;
- Fig. 6: eine Gegenüberstellung einer 2-Elektroden-Anordnung mit Parasitärkapazitäten beim Stand der Technik und der Erfindung nach den Ansprüchen 19 bis 21;
- Fig. 7: Abstandsschwankungen während der Prozeßphasen am Beispiel Autogenverfahren mit Acetylen-Sauerstoff-Plasma mit/ohne Brenner-Elektronik-Null (qualitativ) gemäß den Ansprüchen 19 bis 21;

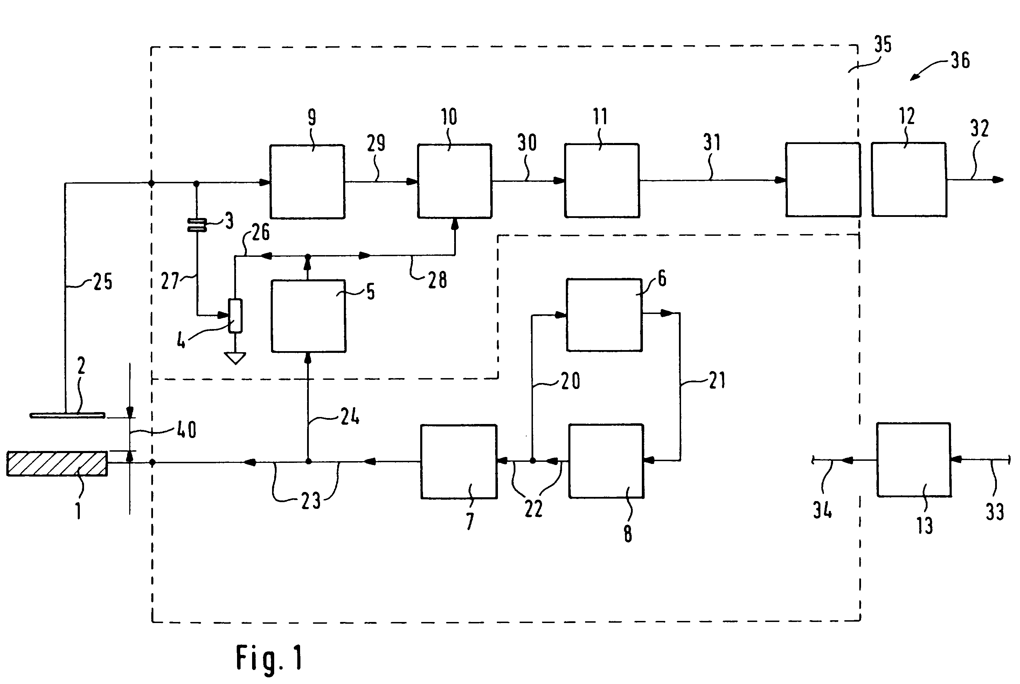

In der Fig. 1 ist schematisch ein Blockschaltbild der Vorrichtung 36 nach der Erfindung dargestellt. Die Vorrichtung besteht im wesentlichen aus einer Auswerteeinheit 35, die über Leitung 25 mit dem Empfänger 2 verbunden ist und dem Werkstück 1, das als Sender ausgebildet ist. Hierzu ist das Werkstück 1 mit einem Wechselspannungsgenerator 8 verbunden, der mit Hilfe der Rückkopplung 6 über die Leitungen 20 und 21 im Sinne einer Amplitudenregelung ein amplitudenstabilisiertes sinusförmiges Wechselspannungssignal erzeugt. Dieses Wechselspannungssignal wird über Leitung 22 und Übertrager 7 auf eine hohe Spannung transformiert und damit über Leitung 23 das Werkstück 1 beaufschlagt. Die erhöhte Wechselspannung bewirkt vorteilhaft einen hohen Störspannungsabstand und eine gleichbleibend hohe Signaldynamik auch über große Maschinen und Werkstücke.

Im Invertierer 5 wird dieses sinusförmige Wechselspannungssignal aus dem Übertrager 7 und den Leitungen 23, 24 um 180° phasengedreht und über Leitung 26 und ein Potentiometer 4 (Einstellelement), Leitung 27 und Koppelkondensator 3 auf den Eingang des Verstärkers 9 geführt. Zum anderen wird das phasengedrehte Signal über Leitung 28 als Frequenzreferenzsignal dem Gleichrichter 10 (Phasendiskriminator) zugeführt. Der Koppelkondensator 3 ist so auslegbar, daß über Potentiometer 4 bei allen vorkommenden praxisnahen Empfängern 2, Dielektrika und Brennerumgebungsausbildungen eine ausreichend große Wechselspannung der Halbbrücke eingestellt werden kann.

Anstelle des Potentiometers (4) kann auch ein D/A-Wandler verwendet werden, wobei dann der Referenzeingang des D/A-Wandlers mit dem 180°-phasengedrehten Signal aus dem Inverter 5 beaufschlagbar und der Analogausgang des D/A-Wandlers mit dem Koppelkondensator 3 verbindbar ist.

Das vom Werkstück 1 ausgesendete Wechselspannungsfeld wird vom Empfänger 2 (Empfangsantenne) empfangen und über Leitung 25 dem Verstärker 9 zugeführt. Wenn die Höhe der von dem Empfänger empfangenen Wechselspannung gleich der um 180° phasengedrehten Wechselspannung ist, so heben sich die beiden Wechselspannungen am Eingang des Verstärkers 9 zu Null auf.

Dem Phasendiskriminator 10 werden die vorverstärkten überlagerten sinusförmigen Wechselspannungen aus invertiertem Signal über Leitung 24, Invertierer 5, Leitung 26, Potentiometer 4, Leitung 27 und Koppelkondensator 3 und das Signal über Empfänger 2 und Leitung 25 mit eventuellen Phasenverschiebungen infolge Abstandsänderungen 40 zugeführt und phasenempfindlich gleichgerichtet. Ein Verstellen des Empfängers 2 hin zu anderen Abständen 40 vom Werkstück 1 führt zu einem richtungsabhängigen Gleichspannungssignal, was über Leitung 30 dem Verstärker 11 zugeführt wird. Voraussetzung ist das Null-Kompensieren über Potentiometer 4 in der gewünschten Arbeitshöhe.

Nach Verstärkung im Verstärker 11 wird die gewonnene Gleichspannung über Leitung 31 als Analog-Ausgangsspannung des Empfängers über den Trennverstärker 12 und Leitung 32 potentialfrei dem Regelkreis einer nachgeschalteten Brennerhöhenverstellung oder ähnlichem zur Verfügung gestellt.

Insgesamt ist das Meßsystem komplett potentialfrei, da neben dem Trennverstärker 12 auch über das Netzteil 13 oder äquivalent dazu über einen DC/DC-Konverter bzw. die Leitungen 33 und 34 kein Potentialabzug zur Umgebung besteht.

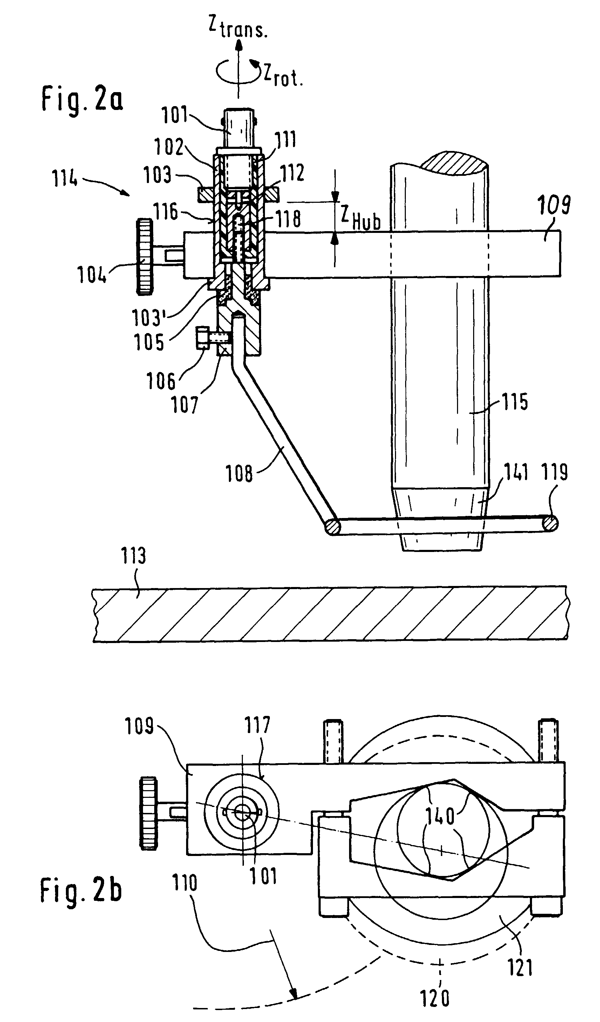

In der Fig. 2a ist ein Anschlußblock in der Seitenansicht und in Fig. 2b in der Draufsicht schematisch dargestellt. Der Anschlußblock ist in seiner Gesamtheit mit 114, die Haltevorrichtung mit 109 und der Brenner mit 115 bezeichnet. Der Anschlußblock 114 weist einen Anschlußstecker 101 auf, der über ein nicht näher dargestelltes Koaxialkabel mit den elektrischen Versorgungen und Auswerteeinheiten verbunden ist. Der Anschlußstecker 101 sitzt in einer rotationssymmetrisch ausgebildeten Isolationshülse 111, die von einer Abschirmbüchse 102 umgeben ist. Die Abschirmbüchse 102 weist einen metallisch leitenden Außenmantel 116 auf und ist als rotationssymmetrisches Drehteil ausgebildet. Über den Außenmantel 116 ist der Anschlußblock 114 mit der Haltevorrichtung 109 verbunden. Hierzu weist die Haltevorrichtung 109 eine der rotationssymmetrischen Form des Außenmantels 116 entsprechende Öffnung 117 auf. Mittels eines verstellbaren Klemmelementes 104 kann der geradlinig in der Öffnung 117 verschiebbare Anschlußblock 114 festgeklemmt werden. Zur Begrenzung des Verschiebeweges sind an dem Außenmantel 116 zwei Anschlagelemente 103 und 103' vorgesehen, die wahlweise verstellbar 103 oder fest 103' mit der Abschirmbüchse verbunden sind. Innerhalb der Isolationshülse 111 ist ein leitendes Verbindungsstück 118 angeordnet, das den koaxial geführten Leiter 112 des Anschlußsteckers 101 und ein die Haltestange 108 des Sensorelementes 119 tragendes Befestigungsteil 107 verbindet. Die Haltestange 108 ist über einen Stift kraftschlüssig mit dem Befestigungsteil 107 leitend verbunden. Über ein Schraubelement 106 kann die Haltestange leicht ausgewechselt werden. Zwischen dem Befestigungsteil 107 und der Abschirmbüchse 102 ist ein Isolator, vorzugsweise ein Keramik-Isolator 105, angeordnet.

Aufgrund der rotationssymmetrischen Form kann die Abschirmbüchse innerhalb der Öffnung 117 auch um ihre Achse gedreht werden. Hierdurch wird es vorteilhaft möglich, das beispielsweise als Ring ausgebildete Sensorelement relativ zum Werkzeug 115 zu verschwenken. Hierdurch können trotz Einsatz der in dem Gebrauchsmuster DE G 90 01 081 beschriebenen Haltevorrichtung, die noch bestehenden Abweichungen zwischen der Brennerachse und der Mittelachse des Anschlußblockes ausgeglichen werden. Dies ist besonders bei kleinen ringförmigen Sensorelementen erforderlich.

Durch den in Teilbereichen als elektrischer Leiter ausgebildeten Anschlußblock 114 wird eine Steigerung der Meßgenauigkeit zur Erfassung von Wechselfeldern, die vom Werkstück 113 als Sendeantenne ausgestrahlt werden, erreicht, weil durch die Abschirmbüchse 102 und die Isolationshülse 111 im Zusammenspiel mit dem Leiter 112 dem Verbindungsstück 118 und dem Befestigungsteil 107 eine hohe Richtwirkung erzielt wird. Es wird eine Felddetektion vorwiegend in Richtung des Werkstückes 113 erreicht, das als Sender ausgebildet ist. Hierdurch wird es vorteilhaft möglich, ein Sensorelement 119 mit kleineren Abmessungen zu verwenden.

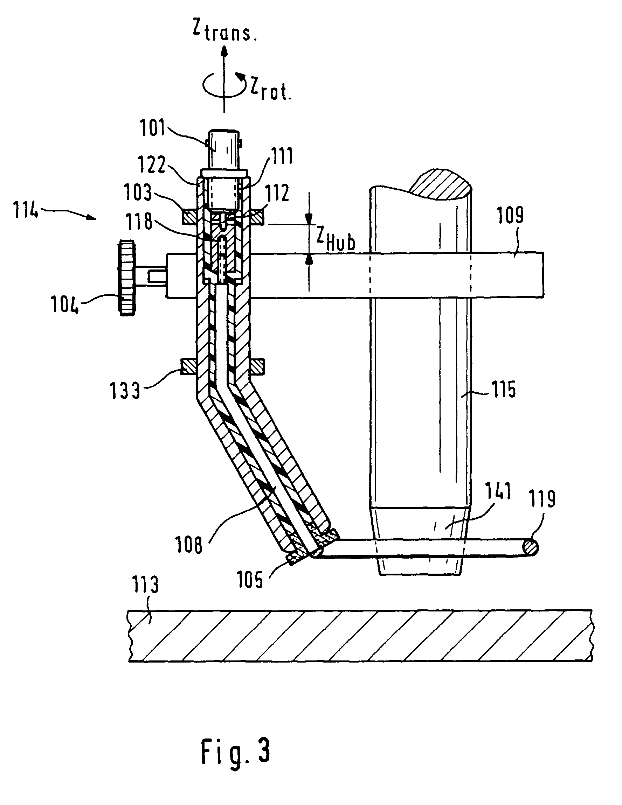

In Fig. 3 ist ein weiteres vorteilhaftes Ausführungsbeispiel dargestellt, wobei der Anschlußblock 114 vollständig bis zu dem Sensorelement 119 als koaxialer Leiter ausgebildet ist. In der Fig. 3 werden für gleiche Bauteile gleiche Bezugsziffern verwendet.

Unterschiedlich zu dem in Fig. 2 dargestellten Anschlußblock 114 ist in Fig. 3 die Abschirmbüchse 122 weiter koaxial in Richtung Sensorelement 119 geführt. Die Abschirmbüchse 122 und gegebenenfalls die in ihr verlaufende Isolierhülse 111 umgeben die Haltestange 108 bis in ermittelbare Nähe zur lösbaren oder festen Verbindungsstelle mit dem Sensorelement 119. Den Abschluß bildet Isolierteil 105, das in Fig. 3 nur schematisch dargestellt ist. Durch diese Ausbildung des schlußblockes 114 als koaxialer Leiter bishin zum Sensorelement 119 werden das Meßergebnis verfälschende Einflüsse vollständig vermieden.

Bei dem in Fig. 2 und Fig. 3 dargestellten Anschlußblock sind die Teile mit einem die Adhäsionskräfte der Schlackespritzer reduzierenden Material beschichtet, z.B. Chrom, Nickel usw. oder teilweise oder ganz mit hochtemperaturbeständigem Kunststoff oder Keramik. Bei Verwendung von elektrisch isolierenden Beschichtungsmaterialien müssen die Flächen der Öffnung 117 und der Brennerbefestigung 140 der Haltevorrichtung unbeschichtet bleiben.

Die als Ring, Plättchen oder in Hufeisenform ausgebildeten Sensorelemente 119 können an einer Haltevorrichtung 109 mehrfach befestigt werden, wenn diese Haltevorrichtung mehrere Werkzeuge, wie dies beispielsweise bei Mehrbrenneraggregaten der Fall ist, trägt. Über eine nicht näher dargestellte Antriebseinrichtung ist es selbstverständlich auch vorteilhaft möglich, den Anschlußblock 114 translativ oder rotativ automatisch zu bewegen. Hierdurch kann das Sensorelement 119 automatisch über eine nicht näher dargestellte Steuerung auf einen vorgegebenen Abstand zu dem Werkstück 113 bzw. zur Düse 141 und zu der Brennermittelachse eingestellt werden. Eine automatische Positionierung relativ zur Düse 141 ist realisierbar, um bei Bearbeitungsmaschinen mit Düsen- oder Brennerwechselsystemen zu gleichen Voraussetzungen für eine Abstandsmessung zu kommen.

In der Fig. 2b ist die Einstellung des Sensorelementes 119 bei unterschiedlichen Brennerdurchmessern schematisch dargestellt. Hierbei ist mit 110 die Achse dargestellt, um die das Sensorelement 119 bei sich änderndem Brennerdurchmesser in seiner Lage zum Brenner 115 korrigiert werden kann.

Das als Ring ausgebildete Sensorelement 119 bewegt sich dabei relativ zur Mittelachse der Brenner auf dem einen Radius um die Achse 110.

Damit kann das Sensorelement 119 aufgrund des rotativen Freiheitsgrades immer zentrisch zur Brennerdüse eingestellt werden. Durch Ausbildung der Innenflächen 140 als nicht linear verlaufende Funktion lassen sich das ringförmige Sensorelement 119 und der Brenner absolut koaxial ausrichten, da sich die Mittelachse des Brenners dann exakt auf einem Radius um Achse 110 bewegt.

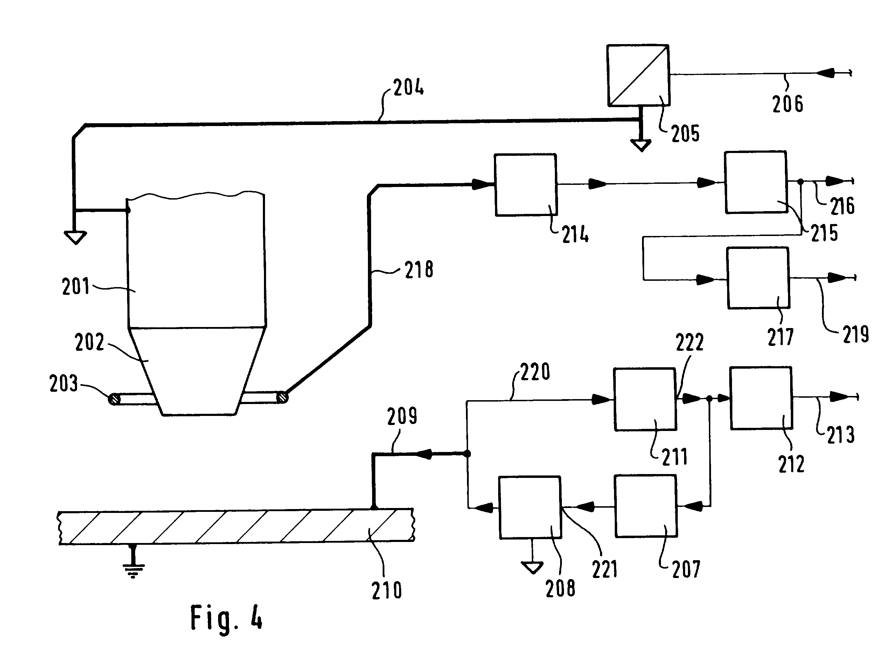

Der in Fig. 4 dargestellte Sensor, der mit Hilfe des Sensorringes 203 die vom Werkstück 210 ausgesendeten Wechselspannungssignale empfängt und verarbeitet, gibt sie über Koaxkabel 218 an die Auswerteelektronik 214 und stellt sie über Anpaßverstärker 215 an Ausgang 216 als Abstandsollwert einem nachgeschalteten nicht dargestellten Regelkreis zur Verfügung. Aus diesem Regelsignal läßt sich in bekannter Weise über den Komparator 217 in Abhängigkeit von Vorzeichen und Höhe des Regelsignals ein digitales Havariesignal des Sensorringes 203 mit dem Werkstück 210 während des Regelbetriebes gewinnen.

Da die Versorgung des Sensors über das Netzteil 205 potentialfrei geschieht, ist es möglich, das Ausgangssignal des Generators 208 direkt über Kabel 209 an das Werkstück 210 zu legen.

Die Erfindung bedingt, daß der Versorgungsspannungsnull des Sensors über Leitung 204 an den gegen Werkstückpotential isoliert montierten Brenner 201 mit Brennerdüse 202 angeschlossen wird.

Der Generator 208 wird gemäß der Erfindung als Amplituden geregelter Oszillator ausgeführt. Dazu wird das Ausgangssignal des Generators über Leitung 220 und Gleichrichter 211 der Regeleinrichtung 207 an den Regeleingang 221 des Oszillators zurückgeführt.

Die Oszillatoramplitude wurde durch diese Maßnahme in einem weiten Belastungsbereich nahezu konstant gehalten. Berührt die Brennerdüse 202 das Werkstück 210 so wird der Oszillator, der sich auch auf den Versorgungsspannungsnull des Sensors bezieht, kurzgeschlossen. Die Spannung am Ausgang 222 des Gleichrichters 211 bricht unter einem bestimmten Wert zusammen.

Der Komparator 212, der mit an dem Ausgang 222 angeschlossen ist, hat eine voreingestellte Schwelle, die oberhalb des Wertes liegt auf die die Gleichspannung an Ausgang 222 des Gleichrichters 211 zusammenbricht.

Wird die Schwelle unterschritten, wird an Ausgang 213 von Komparator 212 das digitale Signal Brennerdüsenhavarie ausgegeben.

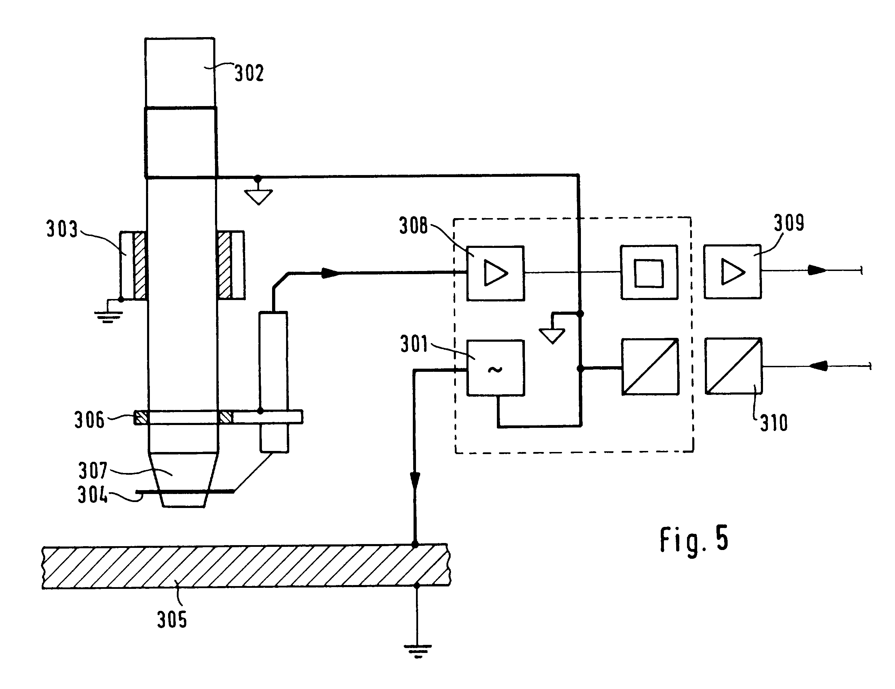

In Fig. 5 ist ein Brenner 302 schematisch dargestellt, der mittels eines Werkzeughalters 303 an der thermischen Bearbeitungsmaschine befestigt ist. An dem Brenner 302 ist über einen Sensorhalter 306 ein Sensorring 304 befestigt. Der Sensorring 304 umgibt die Brennerdüse 307 konzentrisch. Unterhalb von Brennerdüse 307 und Sensorring 304 ist das Werkstück angeordnet. Der Sensorring 304 ist über eine Auswerteeinheit 308 mit einem Trennverstärker 309 verbunden. Das als Sender ausgebildete Werkstück 305 ist mit einem Generator 301 verbunden, der über eine potentialgetrennte Spannungsversorgung 310 an das Versorgungsnetz angeschlossen ist.

Der feste Bezugspunkt des Generators 301 als potentialfreies Elektronik-Null-Potential der Sensorelektronik 311 ist auf das mit Werkzeughalter 303 isoliert gehaltene Werkzeug 302 gelegt, wobei sich beim Sensorabgleich in Arbeitshöhe der Brennerdüse 307 über dem zu bearbeitenden Blech eine bestimmte parasitäre Kapazität einstellt zwischen Sensorring 304 und Werkzeug 302 und mit abgeglichen wird. Dieser Abgleich erfolgt ohne Flamme bzw. ohne Plasmen. Die von der Flamme bzw. von den Plasmen in ihrer unterschiedlichen Ausbildung erzeugten parasitären Kapazitäten beeinflussen diese nur unwesentlich und gehen daher in das Abstandssignal nicht ein. Die eigentliche Meßstrecke von Sensorring 304 zu Werkstück 305 wird durch die Änderung der parasitären Kapazität vom Sensorring 304 zum Werkzeug 302 nich beeinflußt.

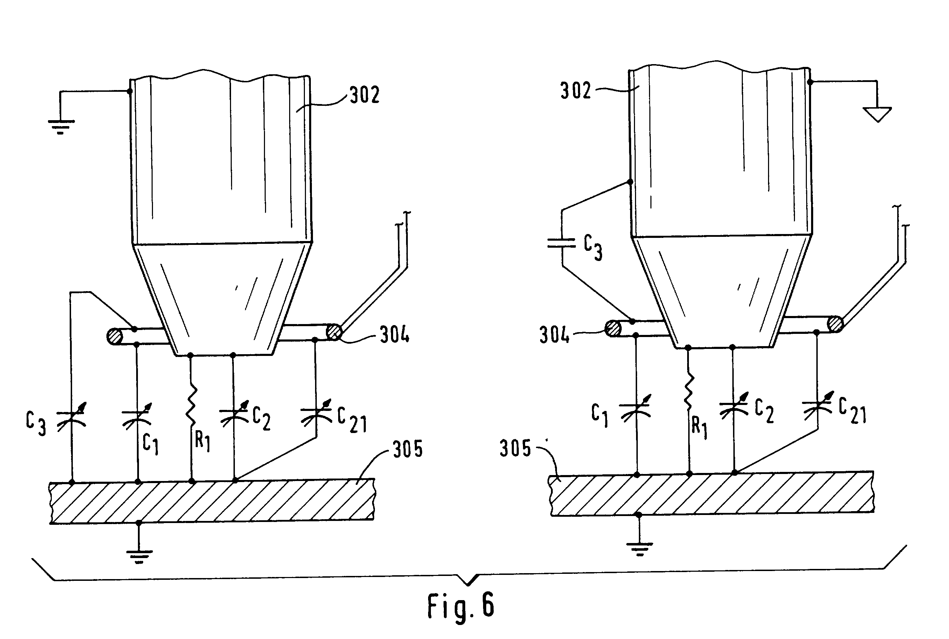

In Fig. 6 sind die plasmabedingten Störeffekte auf kapazitive Abtastsysteme dargestellt, wobei auf der linken Bildseite das Werkzeug 302 auf Maschinenmasse und auf der rechten Bildseite das Werkzeug 302 gemäß der Erfindung auf potentialfreiem Elektronik-Null gelegt ist. Wie aus der Zeichnung hervorgeht, bleiben die parasitären Kapazitäten C2 zwischen. Flamme und Werkzeug 302 und C21 zwischen Flamme und Sensorring bestehen. Während sich die parasitäre Kapazität C3 zwischen Sensorring 304 und Werkzeug 302 beim Sensorabgleich im linken Bild nicht mit abgeglichen wird, sondern sich zu C1 addiert, läßt sich rechts erkennen, daß C3 sich immer auf das Werkzeug 302 bezieht und sich somit nicht zu C1 addieren kann.

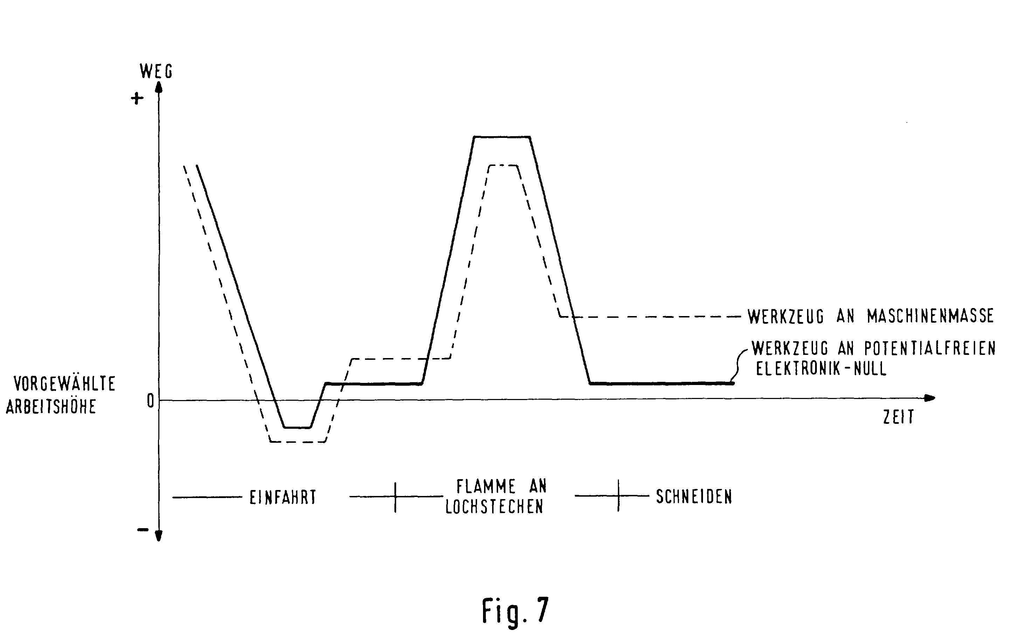

In Fig. 7 ist schematisch der Signalverlauf des von der Sensorelektronik 311 generierten Abstandssignals dargestellt. Die strichelierte Linie zeigt den Verlauf der entsteht, wenn das Werkzeug 302 an Maschinenmasse und die durchgezogene Linie den Verlauf, wenn das Werkzeug 302 entsprechend der Erfindung an potentialfreiem Elektronik-Null gelegt ist. Die ermittelten Abstandsschwankungen während der Prozeßphasen am Beispiel eines genschneidverfahrens mit Acetylen-Sauerstoff-Plasma, zeigen eine geringere Abweichung bei vorgewählter Arbeitshöhe Null bei der Ersthöhenfindung sowie während des Schneidverlaufes.

## Patentansprüche

1. Vorrichtung zum Erfassen von Daten einer thermischen oder Wasserstrahl-Bearbeitungsmaschine, insbesondere des Abstandes zwischen mindestens einem Bearbeitungswerkzeug und einem Werkstück, bei der
- das Werkstück (1) an einen Wechselspannungsgenerator (8) angeschlossen ist und mit einem Wechselspannungssignal beaufschlagt wird,
- dem Werkstück (1) gegenüberliegend ein dem Bearbeitungswerkzeug zugeordneter und/oder als Teil des Bearbeitungswerkzeuges ausgebildeter Empfänger (2) angeordnet ist,
- der Empfänger (2) und das Werkstück (1) mit einer Auswerteeinheit (35) verbunden sind, die Feldveränderungen erfaßt, und
- die Auswerteeinheit (35) einen Verstärker (9) aufweist, der mit dem Ausgang des Empfängers (2) verbunden ist,
dadurch gekennzeichnet,
daß dem Verstärker (9) das invertierte Wechselspannungssignal des Wechselspannungsgenerators über Mittel zugeführt wird, welche die Kapazität zwischen Werkstück (1) und Empfänger (2) in der gewünschten Arbeitshöhe simulieren, und daß der Ausgang des Verstärkers (9) mit der Steuerung des Bearbeitungswerkzeugs verbunden ist.

2. Vorrichtung nach Anspruch 1,
dadurch gekennzeichnet,
daß zwischen dem Wechselspannungsgenerator (8) und dem Werkstück (1) ein die Spannung des Wechselspannungssignales verstärkender Übertrager (7) geschaltet ist.

3. Vorrichtung nach Anspruch 1 oder 2,
dadurch gekennzeichnet,
daß die Auswerteeinheit (35) potentialfrei gegenüber ihrer Umgebung ist, durch Auskoppeln des Ausgangssignals des Empfängers über Trennverstärker (12) und die Spannungsversorgung der Auswerteeinheit (35) über einen potentialgetrennten DC/DC-Wandler oder ein gleichwertiges Netzteil erfolgt.

4. Vorrichtung nach einem der Ansprüche 1 bis 3,
dadurch gekennzeichnet,
daß die Mittel einen Inverter (5) aufweisen, der mit dem Wechselspannungssignal aus dem Generator (8) beaufschlagt und über ein Einstellelement (4) zur Amplitudenverstellung mit einem Koppelkondensator (3) verbunden ist, über den das invertierte Wechselspannungssignal dem Verstärker (9) zuführbar ist.

5. Vorrichtung nach Anspruch 4,
dadurch gekennzeichnet,
daß das Einstellelement (4) ein Potentiometer oder ein D/A-Wandler ist.

6. Vorrichtung nach Anspruch 5,
dadurch gekennzeichnet,
daß der Referenzeingang des D/A-Wandlers mit dem 180°-phasengedrehten Signal aus dem Inverter (5) beaufschlagbar und der Analogausgang des D/A-Wandlers mit dem Koppelkondensator (3) verbindbar ist.

7. Vorrichtung nach einem der Ansprüche 4 bis 6,
dadurch gekennzeichnet,
daß der Koppelkondensator (3) einen festen Wert hat und der Kompensationseinfluß der invertierten Wechselspannung (5) des Generator (8) über eine variable Spannung herstellbar ist.

8. Vorrichtung nach einem der Ansprüche 1 bis 7,
dadurch gekennzeichnet,
daß die Generatorfrequenz bei mehreren Wechselspannungssignalen am gleichen Werkstück unterschiedlich hoch ist.

9. Vorrichtung nach einem der Ansprüche 1 bis 8,
dadurch gekennzeichnet,
daß der Empfänger (2) ein Sensorelement (119) aufweist, das über einen Anschlußblock (114) mit einer Haltevorrichtung (109) der Bearbeitungsmaschine verbunden ist und der Anschlußblock (114) vollständig bis zu dem Sensorelement (119) oder über einen Teilbereich als koaxialer Leiter ausgebildet ist.

10. Vorrichtung nach Anspruch 9,
dadurch gekennzeichnet,
daß der Anschlußblock (114) über einen metallischen Außenmantel (116) leitend mit der Haltevorrichtung (109) verbunden ist.

11. Vorrichtung nach Anspruch 9 oder 10,
dadurch gekennzeichnet,
daß der Anschlußblock (114) in oder an der Haltevorrichtung (109) geradlinig verschiebbar und/oder drehbar ist.

12. Vorrichtung nach einem der Ansprüche 9 bis 11,
dadurch gekennzeichnet,
daß der Außenmantel (116) eine rotationssymmetrische Form aufweist und zwei Anschlagelemente (103, 103, 133) trägt und mindestens ein Anschlagelement (103, 133) verstellbar am Außenmantel (116) befestigt ist.

13. Vorrichtung nach einem der Ansprüche 9 bis 12,
dadurch gekennzeichnet,
daß mindestens der Endbereich des Anschlußblockes (114) mit einem hitzebeständigen Material, wie Keramik oder Kunststoff, isoliert ist.

14. Vorrichtung nach einem der Ansprüche 9 bis 13,
dadurch gekennzeichnet,
daß der Anschlußblock (114) motorisch oder pneumatisch translativ verstellbar und/oder um seine Achse drehbar ist.

15. Vorrichtung nach einem der Ansprüche 9 bis 14,
dadurch gekennzeichnet,
daß der Anschlußblock (114) an seinem Außenmantel mit radialen Maßlinien oder Nonien versehen ist zur reproduzierbaren Einstellung von verschiedenen Positionen des Sensorelementes (119) zum Bearbeitungswerkzeug (115, 302).

16. Vorrichtung nach einem der Ansprüche 1 bis 15,
dadurch gekennzeichnet,
daß der Empfänger mit einer potentialgetrennten Spannungsversorgung verbunden und das Bearbeitungswerkzeug gegen Werkstückpotential isoliert ist und der Wechselspannungsgenerator (208) als Amplituden geregelter Oszillator ausgebildet ist.

17. Vorrichtung nach Anspruch 16,
dadurch gekennzeichnet,
daß das Ausgangssignal des Generators (208) über einen Gleichrichter (211) und eine Regeleinrichtung (207) an den Regeleingang des Generators (208) zurückführbar ist.

18. Vorrichtung nach Anspruch 16 oder 17,
dadurch gekennzeichnet,
daß der Ausgang (222) des Gleichrichters (211) mit einem Komparator (212) verbunden ist.

19. Vorrichtung nach einem der Ansprüche 9 bis 18,
dadurch gekennzeichnet,
daß zur Minimierung von plasmabedingten Störeffekten das Bearbeitungswerkzeug (302) als eines der Sensorelemente ausgebildet ist und das gleiche Bezugspotential hat wie der frequenzerzeugende Generator (301).

20. Vorrichtung nach Anspruch 19,
dadurch gekennzeichnet,
daß das Bearbeitungswerkzeug (302) ein Brenner, oder eine Düse (141, 307) ist.

21. Vorrichtung nach Anspruch 19 oder 20,
dadurch gekennzeichnet,
daß der Brenner (302) oder Teile des Brenners gegenüber der thermischen Bearbeitungsmaschine isoliert sind.

## Claims

1. Device for the acquisition of data from a thermal or water-jet processing machine, in particular of the distance between at least one processing tool and a workpiece, in which
- the workpiece (1) is connected to an AC voltage generator (8) and has an AC voltage signal applied to it,
- a receiver (2) which is assigned to the processing tool and/or is designed as a part of the processing tool is arranged opposite the workpiece (1),
- the receiver (2) and the workpiece (1) are connected to an evaluation unit (35) which detects field variations, and
- the evaluation unit (35) has an amplifier (9) which is connected to the output of the receiver (2),
characterized in that the amplifier (9) is fed the inverted AC voltage signal of the AC voltage generator via means which simulate the capacitance between the workpiece (1) and receiver (2) at the desired work height, and in that the output of the amplifier (9) is connected to the controller of the processing tool.

2. Device according to Claim 1, characterized in that a transformer (7) which amplifies the voltage of the AC voltage signal is connected between the AC voltage generator (8) and the workpiece (1).

3. Device according to Claim 1 or 2, characterized in that the evaluation unit (35) is potential-free with respect to its surroundings due to coupling-out of the output signal of the receiver via an isolation amplifier (12), and the supply of power to the evaluation unit (35) is performed via an isolated DC/DC converter or an equivalent power supply unit.

4. Device according to one of Claims 1 to 3, characterized in that the means have an inverter (5) to which the AC voltage signal from the generator (8) is applied and which is connected via an adjusting element (4) for amplitude adjustment to a coupling capacitor (3) via which the inverted AC voltage signal can be fed to the amplifier (9) .

5. Device according to Claim 4, characterized in that the adjusting element (4) is a potentiometer or a D/A converter.

6. Device according to Claim 5, characterized in that the 180° phase-rotated signal from the inverter (5) can be applied to the reference input of the D/A converter, and the analog output of the D/A converter can be connected to the coupling capacitor (3).

7. Device according to one of Claims 4 to 6, characterized in that the coupling capacitor (3) has a fixed value and the compensating influence of the inverted AC voltage (5) of the generator (8) can be produced via a variable voltage.

8. Device according to one of Claims 1 to 7, characterized in that the generator frequency is at different levels in the case of a plurality of AC voltage signals at the same workpiece.

9. Device according to one of Claims 1 to 8, characterized in that the receiver (2) has a sensor element (119) which is connected via a connecting block (114) to a holding device (109) of the processing machine, and the connecting block (114) is designed as a coaxial conductor completely up to the sensor element (119) or over a subregion.

10. Device according to Claim 9, characterized in that the connecting block (114) is conductively connected to the holding device (109) via a metallic outer shell (116).

11. Device according to Claim 9 or 10, characterized in that the connecting block (114) can be displaced rectilinearly in or on the holding device (109) and/or is rotatable.

12. Device according to one of Claims 9 to 11, characterized in that the outer shell (116) has a rotationally symmetrical shape and bears two stop elements (103, 103', 133), and at least one stop element (103, 133) is adjustably fastened to the outer shell (116).

13. Device according to one of Claims 9 to 12, characterized in that at least the end region of the connecting block (114) is insulated using a heat-resistant material such as ceramic or plastic.

14. Device according to one of Claims 9 to 13, characterized in that the connecting block (114) can be adjusted in a translatory fashion by motor or pneumatically and/or is rotatable about its axis.

15. Device according to one of Claims 9 to 14, characterized in that the connecting block (114) is provided on its outer shell with radial dimension lines or verniers for the purpose of reproducible adjustment of different positions of the sensor element (119) relative to the processing tool (115, 302).

16. Device according to one of Claims 1 to 15, characterized in that the receiver is connected to an isolated power supply and the processing tool is isolated with respect to the workpiece potential, and the AC voltage generator (208) is designed as an amplitude-regulated oscillator.

17. Device according to Claim 16, characterized in that the output signal of the generator (208) can be fed back to the control input of the generator (208) via a rectifier (211) and a controlling system (207).

18. Device according to Claim 16 or 17, characterized in that the output (222) of the rectifier (211) is connected to a comparator (212).

19. Device according to one of Claims 9 to 18, characterized in that, for the purpose of minimizing plasma-induced interference effects, the processing tool (302) is designed as one of the sensor elements and has the same reference potential as the frequency-generating generator (301).

20. Device according to Claim 19, characterized in that the processing tool (302) is a burner or a nozzle (141, 307).

21. Device according to Claim 19 or 20, characterized in that the burner (302) or parts of the burner are insulated with respect to the thermal processing machine.

## Revendications

1. Dispositif pour détecter les données d'une machine d'usinage thermique ou à jet d'eau, notamment l'écartement entre au moins un outil d'usinage et une pièce, selon lequel :
- la pièce (1) est reliée à un générateur de tension alternative (8) et reçoit un signal de tension alternative,
- en regard de la pièce (1) il y a un récepteur (2) associé à l'outil et/ou comme partie de l'outil,
- le récepteur (2) et la pièce (1) sont reliés à une unité d'exploitation (35) qui détecte les variations de champ et
- l'unité d'exploitation (35) comporte un amplificateur (9) relié à la sortie du récepteur (2),
caractérisé en ce que
l'amplificateur (9) reçoit le signal de tension alternative inversé du générateur de tension alternative par des moyens qui simulent la capacité entre la pièce (1) et le récepteur (2) dans la hauteur de travail souhaitée et la sortie de l'amplificateur (9) est reliée à la commande de l'outil d'usinage.

2. Dispositif selon la revendication 1,
caractérisé en ce qu'
entre le générateur de tension alternative (8) et la pièce (1) se trouve branché un transmetteur (7) qui amplifie la tension du signal de tension alternative.

3. Dispositif selon la revendication 1 ou 2,
caractérisé en ce que
l'unité d'exploitation (35) est libre de potentiel par rapport à l'environnement, par découplage du signal de sortie du récepteur par un amplificateur de découplage (12) et l'alimentation en tension de l'unité d'exploitation (35) se fait par un convertisseur continu/continu à potentiel séparé ou une partie de réseau de même nature.

4. Dispositif selon l'une des revendications 1 à 3,
caractérisé en ce que
les moyens comprennent un inverseur (5) qui reçoit le signal de tension alternative du générateur (8) et est relié par un élément de réglage (4) servant au réglage de l'amplitude à un condensateur de couplage (3) par lequel le signal de tension alternative, inversé peut être appliqué à l'amplificateur (9).

5. Dispositif selon la revendication 4,
caractérisé en ce que
l'élément de réglage (4) est un potentiomètre ou un convertisseur numérique/analogique.

6. Dispositif selon la revendication 5,
caractérisé en ce que
l'entrée de référence du convertisseur numérique/analogique reçoit de l'inverseur (5) un signal déphasé de 180° et la sortie analogique du convertisseur numérique/analogique (D/A) peut être reliée au condensateur de couplage (3).

7. Dispositif selon l'une des revendications 4 à 6,
caractérisé en ce que
le condensateur de couplage (3) a une valeur fixe et l'influence de compensation de la tension alternative inversée (5) du générateur (8) s'établit par une tension variable.

8. Dispositif selon l'une des revendications 1 à 7,
caractérisé en ce que
la fréquence du générateur pour plusieurs signaux de tension alternative sur la même pièce est de niveau différent.

9. Dispositif selon l'une des revendications 1 à 8,
caractérisé en ce que
le récepteur (2) comporte un élément de capteur (119) relié par un bloc de raccordement (114) à un dispositif de fixation (109) de la machine d'usinage et le bloc de raccordement (114) est réalisé comme conducteur coaxial complètement jusqu'à l'élément de capteur (119) ou sur une partie de la zone partielle.

10. Dispositif selon la revendication 9,
caractérisé en ce que
le bloc de raccordement (114) est relié en conduction au dispositif de fixation (109) par une enveloppe extérieure métallique (116).

11. Dispositif selon la revendication 9 ou 10,
caractérisé en ce que
le bloc de raccordement (114) peut coulisser en ligne droite et/ou tourner dans ou sur le dispositif de fixation (109).

12. Dispositif selon l'une des revendications 9 à 11,
caractérisé en ce que
l'enveloppe extérieure (116) présente une forme à symétrie de rotation et porte deux éléments de butée (103, 103', 133) et au moins un élément de butée (103, 133) est fixé de manière réglable à l'enveloppe extérieure (116).

13. Dispositif selon l'une des revendications 9 à 12,
caractérisé en ce qu'
au moins la zone d'extrémité du bloc de raccordement (114) est isolée par une matière réfractaire telle qu'une céramique ou de la matière plastique.

14. Dispositif selon l'une des revendications 9 à 13,
caractérisé en ce que
le bloc de raccordement (114) est réglable en translation et/ou peut être tourné autour de son axe par un moteur ou un moyen pneumatique.

15. Dispositif selon l'une des revendications 9 à 14,
caractérisé en ce que
le bloc de raccordement (114) est muni sur son enveloppe extérieure de lignes de mesure radiales ou nonies, pour régler de manière reproductible différentes positions de l'élément de capteur (119) par rapport à l'outil d'usinage (115, 302).

16. Dispositif selon l'une des revendications 1 à 15,
caractérisé en ce que
le récepteur est relié à une alimentation en tension à séparation de potentiel et l'outil d'usinage est isolé par rapport au potentiel de l'outil et le générateur de tension alternative (208) est constitué par un oscillateur à réglage d'amplitude.

17. Dispositif selon la revendication 16,
caractérisé en ce que
le signal de sortie du générateur (208) est reconduit par un redresseur (211) et une installation de régulation (207) à l'entrée de régulation du générateur (208).

18. Dispositif selon la revendication 16 ou 17,
caractérisé en ce que
la sortie (222) du redresseur (211) est reliée à un comparateur (212).

19. Dispositif selon l'une des revendications 9 à 18,
caractérisé en ce que
pour minimiser les effets parasites entraînés par le plasma, l'outil d'usinage (302) est en forme d'élément de détection et possède le même potentiel de référence que le générateur de fréquence (301).

20. Dispositif selon la revendication 19,
caractérisé en ce que
l'outil d'usinage (302) est une torche ou une buse (141, 307).

21. Dispositif selon la revendication 19 ou 20,
caractérisé en ce que
la torche (302) ou des parties de la torche sont isolées par rapport à la machine d'usinage thermique.
